# EUROPEAN PATENT APPLICATION

(11) **EP 4 838 922 A1**
(43) Date of publication of application: **11.11.2026**
(21) Application number: 25305638.6
(22) Date of filing: 05.05.2025
(51) Int. Cl.: H04W 12/06, H04W 12/40

(54) **SYSTEM FOR DYNAMICALLY ENROLLING USER EQUIPMENT INTO PRIVATE NETWORK, AND METHOD THEREOF**

(71) Applicant: THALES DIS FRANCE SAS, 92190 Meudon (FR); THALES, 92190 Meudon (FR)
(72) Inventor: DEMARTY, Joël, 35520 Montreuil-le-Gast (FR); SCHOLLER, Franck, 92190 MEUDON (FR)
(74) Representative: Lotaut, Yacine Diaw

(57) **Abstract**

A system (102) and method (400) for dynamically enrolling user equipment (UE) (108) into private network is disclosed. The system (102) may identify one or more private networks within a range of at least one user equipment (UE) (108). The system (102) may further validate an embedded Subscriber Identity Module (eSIM) profile associated with an eSIM integrated within the at least one UE (108) based on one or more credentials, and correspondingly register the at least one UE (108) to access the one or more private networks upon a positive validation. The system (102) may further dynamically enrol the at least one registered UE (108) to the at least one of: an on-boarding private network and a protected private network among the one or more private networks in an offline mode.

## Description

### FIELD OF USE

The present disclosure relates to networking systems. More specifically, the present disclosure provides a system for dynamically enrolling User Equipment (UE) into private networks, and a method thereof.

### BACKGROUND

Non-Public Networks (NPNs) are a pivotal aspect of 5G innovations, which unlock significant business opportunities by enabling connectivity solutions, such as private networks, to execute operations. However, the temporary on boarding of new end users onto such NPNs presents several challenges. Existing solutions, like embedded Subscriber Information Module (eSIM) as a Service and Trusted Internet Connections (TIC) local solutions, offer partial solutions but fail to completely address the operational and business requirements for a seamless, device-independent on boarding strategy. The limitations of the existing solutions hinder the broader adoption of NPNs and the realisation of their potential.

Moreover, a key disadvantage of the eSIM-as-a-service approach lies in its dependency on internet connectivity for profile downloads. This dependency creates complications in scenarios where secure or offline environments are prioritised, such as tactical private networks. Additionally, the existing solution lacks robust lifecycle control on the NPN side, creating a cumbersome situation for managing critical actions like on boarding and revoking users. These shortcomings can lead to inefficiencies and potential security risks in dynamic or high-stakes deployments.

The TIC local solution is tethered to the provisioning of Thales eSIMs with the correct eIMSI. This dependency introduces a significant business barrier, as not all devices, particularly recent eSIM-only smartphones like iPhones, are compatible or equipped with the required TIC provisioning. The limitation of the existing solution prevents the broad application of the solution, leaving users with newer devices underserved and potentially locked out of NPN access.

Further, the eSIMs, which are owned by network operators (whether state-controlled, public, or private), are to be configured to enable dynamic registration with a private network that is independent of the original network with which the eSIMs were initially provisioned. This functionality needs to facilitate the controlled and seamless integration of civilian users into a military network environment while maintaining full control over access and security.

Furthermore, the lack of a universally compatible solution stifles scalability and flexibility in NPN deployments. The absence of a mechanism that can work with all eSIM types, including removable eSIMs, restricts the network administrator's ability to on board a diverse range of devices seamlessly. To overcome these challenges, a solution must be developed that combines compatibility, lifecycle control, and independence from specific hardware provisioning, ensuring both operational efficiency and user inclusivity in the NPN ecosystem.

Therefore, there is a need for a method and system that addresses the above-mentioned technical problems by dynamically enrolling user equipment (UE) into private networks.

### SUMMARY

The following embodiments presents a simplified summary in order to provide a basic understanding of some aspects of the disclosure. This summary is not an extensive overview, and it is not intended to identify key/critical elements or to delineate the scope thereof. Its sole purpose is to present some concepts in a simplified form as a prelude to the more detailed description that is presented later.

Some example embodiments disclosed herein provide a system for dynamically enrolling user equipment (UE) into private network. The system comprises one or more processors coupled with at least one memory. The said at least one memory stores instructions which when executed by the one or more processors cause the system to identify one or more private networks within a range of at least one user equipment (UE). Further, the system is configured to validate an embedded Subscriber Identity Module (eSIM) profile associated with an eSIM integrated within the at least one UE based on one or more credentials, and correspondingly register the at least one UE to access the one or more private networks upon a positive validation. Furthermore, the system is configured to dynamically enrol the at least one registered UE to the at least one of an on-boarding private network and a protected private network among the one or more private networks in an offline mode.

According to some example embodiments, at least one registered UE is enrolled with the on-boarding private network based on the eSIM profile. The at least one registered UE is enrolled with the protected private network based on the eSIM profile.

According to some example embodiments, the one or more private network comprise a local Over-the-Air (OTA) service and a local Home Subscriber Server (HSS) service. The local OTA service enables communication between the one or more private networks and the eSIM in the offline mode. The local HSS service enables storage of the one or more credentials associated with the at least one registered UE.

According to some example embodiments, the system comprise at least one API configured to trigger at least one OTA session towards the OTA service when the at least one UE is enrolled with the on-boarding private network.

According to some example embodiments, the least one API is configured to trigger a reattachment with a new eSIM embedded within the at least one registered UE during enrolment with the on-boarding private network.

According to some example embodiments, the eSIM profile is configured to connect the at least one UE to the one or more private networks before the enrolment. The eSIM profile can be downloaded on the eSIM of the at least one registered UE by using one or more mechanisms comprising at least one of an online with ODC, and an offline with IFPP.

According to some example embodiments, the offline mode pertains to disconnection of the at least one UE from one or more internet services.

Some example embodiments disclosed herein provide a method for dynamically enrolling at least one user equipment into one or more private networks, the method may comprise identifying, by a system, one or more private networks within a proximity range of at least one user equipment (UE). The method may further comprise validating, by the system, an embedded Subscriber Identity Module (eSIM) profile associated with an eSIM integrated within the at least one UE by using one or more credentials, correspondingly and register the at least one UE to access the one or more private networks upon a positive validation. The method may further comprise dynamically enrolling, by the system, the at least one registered UE to the at least one of an on-boarding private network and a protected private network of the one or more private networks in an offline mode.

According to some example embodiments, the method comprises the step of enrolling the at least one registered UE with the on-boarding private network based on the eSIM profile. Further, the method comprises the step of enrolling the at least one registered UE with the protected private network based on the eSIM profile.

According to some example embodiments, the one or more private networks comprise a local Over-the-Air (OTA) service and a local Home Subscriber Server (HSS) service the method comprises the step of: enabling, by the local OTA service, communication between the one or more private networks and the eSIM in the offline mode. Further, enabling, by the local HSS service, storage of the one or more credentials associated with the at least one registered UE.

According to some example embodiments, the method comprises the step of triggering, by at least one API, at least one OTA session towards the OTA service when the at least one UE is associated with the on-boarding private network.

According to some example embodiments, the method can comprise the step of triggering, by the at least one API, a reattachment with a new eSIM embedded within the at least one registered UE during enrolment with the on-boarding private network.

According to some example embodiments, the eSIM profile is configured to connect the at least one UE to the one or more private networks before the enrolment. The eSIM profile is downloaded on the eSIM of the at least one registered UE by using one or more standard mechanisms comprising at least one of an online with ODC, an offline with IFPP.

According to some example embodiments, the offline mode pertains to disconnection of the at least one UE from one or more internet services.

The foregoing summary is illustrative only and is not intended to be in any way limiting. In addition to the illustrative aspects, embodiments, and features described above, further aspects, embodiments, and features will become apparent by reference to the drawings and the following detailed description.

### DEFINITIONS

The term "private network" (also popularly known as "Non-Public Networks) as used herein in the specification may refer to a communications network dedicated to a specific organization or group, designed to offer secure and controlled access to its resources. Unlike public networks, the private networks operate independently and are not accessible to the general public. Private networks can be physical or virtual, supporting exclusive data exchange and connectivity for devices, users, and applications within a defined scope. In the 5G context, Non-Public Networks (NPNs) are specialized private networks providing advanced features like low latency, high bandwidth, and customized security. The NPNs are often deployed in industries like manufacturing, healthcare, and defence for tailored operational needs.

The term "Application Programming Interface (API)" as used herein in the specification may refer to a software that a user (for example, a human or another software) may use to perform certain function on a computer system. For example, web browser, email client, excel, games, command prompt.

The term "System software" as used herein in the specification may refer to a software that is used by another software to augment their features. The system software is usually implemented as libraries.

The term "Library" as used herein in the specification may be used to distribute functions that multiple applications and other libraries can use. For example, every system has a standard library. Other examples are libraries to provide cryptography, advanced mathematics, compression.

The term "Operating system" as used herein in the specification may provide management for hardware like storage devices, network interfaces, along with providing process and memory management, amongst a host of other capabilities such as Microsoft Windows, Linux, MacOS, and Android. The operating systems provide an interface call system calls through which applications can access hardware devices, allocate memory, or execute programs.

The term "embedded Subscriber Identity Module (eSIM)" as used herein in the specification may refer to a programmable SIM card built directly into a device. Unlike traditional physical SIM cards, eSIMs are soldered onto a device's motherboard, eliminating the need for removable cards. eSIM support remote provisioning, allowing users to activate or switch mobile network operator profiles without changing physical cards.

The term "embedded Subscriber Identity Module (eSIM) profile" as used herein in the specification may refer to a digital representation of the SIM card information that enables a device to connect to a specific mobile network. eSIM profile contains essential data, such as the International Mobile Subscriber Identity (IMSI), encryption keys, and network operator-specific details. eSIM profiles can be downloaded and activated remotely over the air (OTA) through a process managed by a Subscription Manager (SM).

The term "program" as used herein in the specification may refer to set of instructions stored in an executable file to achieve a certain output.

### BRIEF DESCRIPTION OF DRAWINGS

The above and still further example embodiments of the present disclosure will become apparent upon consideration of the following detailed description of embodiments thereof, especially when taken in conjunction with the accompanying drawings, and wherein:
FIG. 1A illustrates a block diagram of an environment of a system for dynamically enrolling user equipment (UE) into private network, in accordance with an example embodiment;
FIG. 1B illustrates a block diagram illustrating the interaction between the private network components and the embedded system side through the UE's modem, in accordance with an example embodiment;
FIG. 2 illustrates a block diagram illustrating various modules within a memory of a user equipment (UE) for enabling dynamic enrolment into private network, in accordance with an example embodiment;
FIG. 3 illustrates a block diagram of a system architecture for dynamically enrolling UE into private network, in accordance with an example embodiment;
FIG. 4 illustrates a flow diagram of a method for handling dynamically enrolling at least one user equipment into one or more private networks, in the computing environment, in accordance with an example embodiment;
FIG. 5 illustrates a block diagram of an exemplary computer system for implementing embodiments consistent with the present disclosure.

The figures illustrate embodiments of the disclosure for purposes of illustration only. One skilled in the art will readily recognize from the following description that alternative embodiments of the structures and methods illustrated herein may be employed without departing from the principles of the disclosure.

### DETAILED DESCRIPTION

In the following description, for purposes of explanation, numerous specific details are set forth in order to provide a thorough understanding of the present disclosure. It will be apparent, however, to one skilled in the art that aspects of the present disclosure can be practiced without these specific details. In other instances, systems, apparatuses, and methods are shown in block diagram form only in order to avoid obscuring the present disclosure.

Reference in this specification to "one embodiment" or "an embodiment" or "example embodiment" means that a particular feature, structure, or characteristic described in connection with the embodiment is included in at least one embodiment of the present disclosure. The appearance of the phrase "in one embodiment" in various places in the specification are not necessarily all referring to the same embodiment, nor are separate or alternative embodiments mutually exclusive of other embodiments. Further, the terms "a" and "an" herein do not denote a limitation of quantity, but rather denote the presence of at least one of the referenced items. Moreover, various features are described which may be exhibited by some embodiments and not by others. Similarly, various requirements are described which may be requirements for some embodiments but not for other embodiments.

Some embodiments of the present disclosure will now be described more fully hereinafter with reference to the accompanying drawings, in which some, but not all, embodiments of the invention are shown. Indeed, various embodiments of the invention may be embodied in many different forms and should not be construed as limited to the embodiments set forth herein; rather, these embodiments are provided so that this disclosure will satisfy applicable legal requirements. Like reference numerals refer to like elements throughout.

The terms "comprise", "comprising", "includes", or any other variations thereof, are intended to cover a non-exclusive inclusion, such that a setup, device, or method that comprises a list of components or steps does not include only those components or steps but may include other components or steps not expressly listed or inherent to such setup, device, or method. In other words, one or more elements in a system or apparatus proceeded by "comprises... a" does not, without more constraints, preclude the existence of other elements or additional elements in the system or method.

The embodiments are described herein for illustrative purposes and are subject to many variations. It is understood that various omissions and substitutions of equivalents are contemplated as circumstances may suggest or render expedient but are intended to cover the application or implementation without departing from the spirit or the scope of the present disclosure. Further, it is to be understood that the phraseology and terminology employed herein are for the purpose of the description and should not be regarded as limiting. Any heading utilized within this description is for convenience only and has no legal or limiting effect.

The system and method for dynamically enrolling user equipment (UE) into one or more private networks may comprise the UE initiating a secure communication with the network's enrolment system. The system then authenticates the UE using unique identifiers and checks the compatibility with the network's eSIM or provisioning requirements. Further, the required eSIM profile is securely provisioned via an OTA (Over-the-Air) server, enabling the device to connect to the one or more private networks. Once the UE is authenticated and provisioned, the UE is granted access to the one or more private network with the appropriate permissions.

As described earlier, conventional methods of enrolling user equipment into the private network faces technical challenges such as ensuring compatibility with different eSIM types and network configurations. Issues arise in securely provisioning eSIM profiles, especially when remote access or specific hardware is required. Additionally, managing device authentication and maintaining consistent lifecycle control across various devices can be complex. The said hurdles can lead to delays and inefficiencies in executing seamless enrollment processes.

The embodiments enable eSIMs, which are owned and issued by network operators, whether state-controlled, public, or private, may be configured to dynamically register with an independent private network that is unrelated to the original network with which the eSIMs were initially provisioned. This capability enables controlled and secure integration of civilian users into specialized network environments, such as military, emergency response, or secure government networks, without requiring physical modification or replacement of their eSIMs. For example, in a military environment, a private network operating within a secured facility may allow civilian contractors or temporary personnel, who are originally provisioned on commercial carrier networks, to dynamically authenticate and register with the private military network upon entering the facility. This allows for seamless communication while ensuring strict access control and security measures.

Similarly, in emergency response scenarios, first responders operating with eSIMs from various commercial carriers may gain access to a dedicated emergency network deployed in the affected area, allowing inter-agency communication while maintaining security protocols. In a government or corporate secure network environment, employees or authorized third-party consultants may be permitted to automatically switch to a private network when entering a secured location, thereby restricting access to sensitive communications while avoiding the need to issue separate eSIM credentials. The system may utilize over-the-air (OTA) provisioning, eSIM remote management technology, or network authentication protocols such as Public Key Infrastructure (PKI) and Extensible Authentication Protocol-Authentication and Key Agreement (EAP-AKA) to facilitate dynamic registration and authentication. Additionally, access may be revoked automatically when the user exits the designated area, restoring the eSIM's connectivity to its original network. By enabling pre-existing eSIM to temporarily register with private networks while maintaining stringent authentication controls, this approach enhances security and controlled network access in critical environments while eliminating operational inefficiencies associated with issuing new eSIM credentials for temporary users.

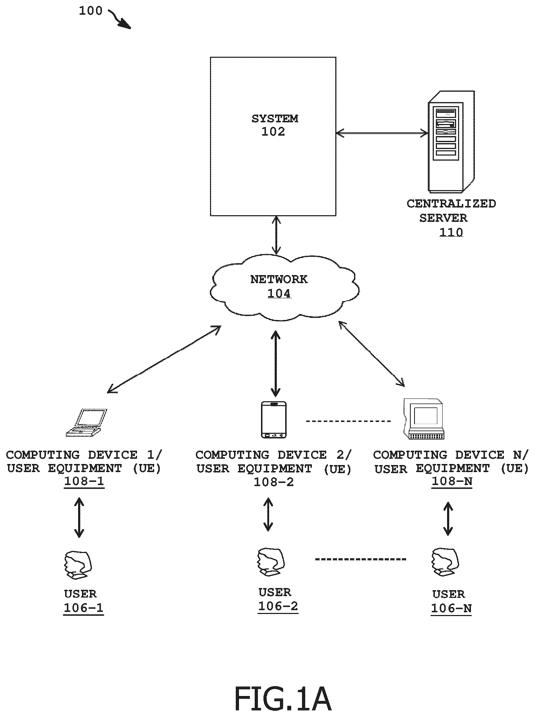

Embodiments of the present disclosure may provide a method, a system for dynamically enrolling user equipment (UE) 108 into private network. The method, the system for such enrolment is described with reference to FIG. 1A to FIG. 6 as detailed below.

FIG. 1A illustrates a block diagram 100 of an environment of a system 102 for dynamically enrolling user equipment (UE) or computing device 108-1 to 108-N (collectively referred to as user equipment (UE) 108 or computing device 108, hereinafter) into a private network, in accordance with an example embodiment. The system 102 may be communicatively coupled with the at least one UE 108 and a centralized server 110 via a communication network 104. Examples of the UE 108 may comprise, but are not limited to, a desktop, a laptop, a notebook, a tablet, a smartphone, a mobile phone, an application server, or the like. The UE is associated with at least one user 106-1 to 106-N (collectively referred to as user 106, hereinafter). The centralized server 110 acts as the core management point for provisioning, authenticating, and controlling access for the UE 108 to the private network. The centralized server 110 securely stores and distributes eSIM profiles, enabling remote activation and updates. The centralized server 110 ensures seamless communication between the UE 108 and the network by coordinating device on boarding and lifecycle management.

It is to be appreciated that as the system 102 involves a centralized server 110 for handling device enrolment and lifecycle control, this approach facilitates efficient coordination between UE 108 and the private network, enabling real-time updates and seamless integration of a diverse range of devices into the private network ecosystem. The centralized architecture ensures streamlined management and improves operational efficiency across the network.

The communication network 104 may be wired, wireless, or any combination of wired and wireless communication networks, such as cellular, Wi-Fi, internet, local area networks, or the like. In one embodiment, the communication network 104 may comprise one or more networks such as a data network, a wireless network, a telephony network, or any combination thereof. It is contemplated that the data network may be any local area network (LAN), metropolitan area network (MAN), wide area network (WAN), a public data network (e.g., the Internet), short range wireless network, or any other suitable packet-switched network, such as a commercially owned, proprietary packet-switched network, e.g., a proprietary cable or fibre-optic network, and the like, or any combination thereof. In addition, the wireless network may be, for example, a cellular network and may employ various technologies comprising enhanced data rates for global evolution (EDGE), general packet radio service (GPRS), global system for mobile communications (GSM), Internet protocol multimedia subsystem (IMS), universal mobile telecommunications system (UMTS), etc., as well as any other suitable wireless medium, e.g., worldwide interoperability for microwave access (WiMAX), Long Term Evolution (LTE) networks, code division multiple access (CDMA), wideband code division multiple access (WCDMA), wireless fidelity (Wi-Fi), wireless LAN (WLAN), Bluetooth^{®}, Internet Protocol (IP) data casting, satellite, mobile ad-hoc network (MANET), and the like, or any combination thereof.

The system 102 may be configured for dynamically enrolling the UE 108 into private network by identifying one or more private networks within a range of at least one user equipment UE 108. Further, the system 102 may be configured to validate an embedded Subscriber Identity Module (eSIM) profile associated with an eSIM integrated within the at least one UE based on one or more credentials, and correspondingly register the at least one UE to access the one or more private networks upon a positive validation. The one or more credentials may comprise, but not limited to: an International Mobile Equipment Identity (IMEI), an international mobile subscriber identity (IMSI), a pre-shared device information, and the like. The eSIM profile is configured to connect the at least one UE 108 to the one or more private networks before the enrolment. The eSIM profile may be downloaded on the eSIM of the at least one registered UE 108 by using one or more mechanisms comprising at least one of an online with Optimal Data Compression (ODC), and an offline with Inter-Frame Pacing Protocol (IFPP). The offline mode pertains to disconnection of the at least one UE from one or more internet services.

Further, the system 102 may be configured to dynamically enrol the at least one registered UE 108 to the at least one of: an on-boarding private network and a protected private network among the one or more private networks in an offline mode. The at least one registered UE 108 may be enrolled with the on-boarding private network based on the eSIM profile. The at least one registered UE 108 may be enrolled with the protected private network based on the eSIM profile.

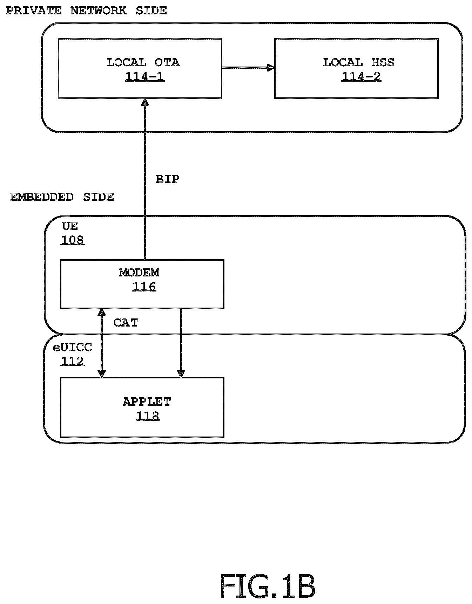

FIG. 1B illustrates a block diagram depicting the interaction between the private network components (Local OTA and HSS) and the embedded system (eUICC with Captive Portal Applet) through the UE's modem, in accordance with an example embodiment. As illustrated, on the private network side, the system includes a local Over-The-Air (OTA) service 114-1 and a Home Subscriber Server (HSS) 114-2. The OTA service 114-1 may be enable secure management of network credentials, requiring tamper-proof hardware, such as a Hardware Security Module (HSM), to protect sensitive network keys. Further, the HSS 114-2 acts as the central database for subscriber authentication and authorization, which stores credentials associated with the registered users 106. The decision to on board new users 106 may be delegated to an enterprise input/output device backend or to special user-specific systems, depending on the use case. In an embodiment, a Global HSS which is a centralized Home Subscriber Server (HSS) that serves multiple networks, regions, or operators by storing and managing subscriber data in a unified system may be applied. Further, Global HSS is typically used in large-scale telecom environments where operators want to consolidate subscriber management across multiple locations. In an another embodiment, UDM (Unified Data Management), a key component in 5G Core (5GC) networks, acting as the evolution of the HSS (Home Subscriber Server) in LTE and HLR (Home Location Register) in 2G/3G networks may be used. The UDM is responsible for managing subscriber data and supporting authentication, mobility, and session management. In an alternate embodiment, an Identity Credential Management Database (IDCM DB) a specialized database used in telecommunications networks, security systems, and identity management frameworks to store and manage subscriber credentials and authentication data may be employed. The IDCM DB plays a key role in ensuring secure user authentication, authorization, and access control.

On the embedded side, an embedded Universal Integrated Circuit Card (eUICC) 112 associated with the at least one registered UE 108 acts as a host for a Captive Portal Applet 118 supporting multiple Mobile Subscriber Identities (MSIs). The applet 118 can be connected to the OTA service 114-1 via a Bearer Independent Protocol (BIP) through the modem 116 associated with the at least one registered UE 108, leveraging the Card Application Toolkit (CAT) for communication. This setup allows secure and efficient on boarding of with the at least one registered UE's 108 into the private network, ensuring seamless integration and secure operation within the NPN.

The CAT allows the Captive Portal Applet 118 in the eUICC 112 to coordinate with the modem 116 of the at least one registered UE 108 and communicate with the private network's OTA server. CAT ensures the UE 108 can dynamically manage and authenticate connections in the Non-Public Network (NPN) environment. Further, the BIP enables exchange of data between the at least one registered UE 108 and external entities, such as network servers, through the UE's modem 116, irrespective of the underlying bearer (e.g., LTE, GPRS). The BIP works alongside the CAT to enable the eUICC 112 to initiate and manage secure communication sessions, supporting functionalities like over-the-air (OTA) updates and provisioning, facilitating secure on boarding and network management within the Non-Public Network (NPN).

The system 102 may comprise at least one API configured to trigger at least one OTA session towards the OTA service 114-1 when the at least one UE 108 is enrolled with the on-boarding private network. The at least one API is configured to trigger a reattachment with a new eSIM embedded within the at least one registered UE during enrolment with the on-boarding private network.

Accordingly, the system 102 introduces an automated eSIM provisioning, which allows for the remote provisioning of eSIM profiles over the air (OTA). This capability significantly simplifies the on boarding process by enabling UEs 108 to be activated and configured without requiring manual intervention. This automation enhances efficiency, reduces setup time, and ensures a more seamless and scalable deployment of devices within the network. These advancements collectively improve the adaptability and performance of private network systems.

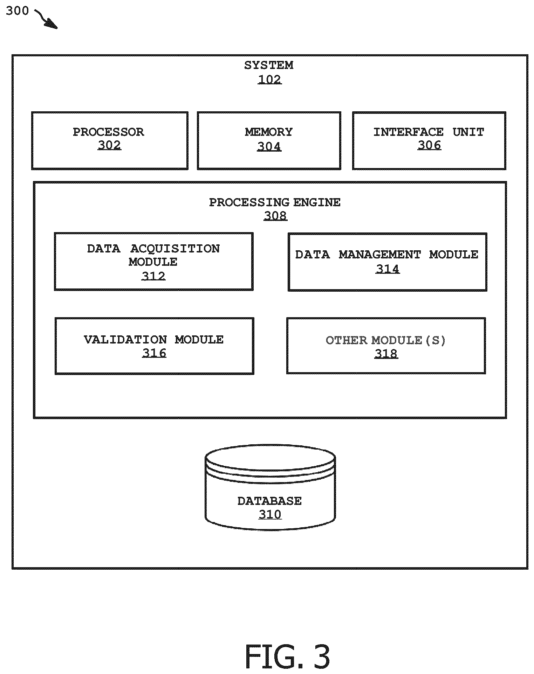

The system 102 may comprise a memory 304, and a processor 302 as shown in FIG. 3. The term "memory" used herein may refer to any computer-readable storage medium, for example, volatile memory, random access memory (RAM), non-volatile memory, read only memory (ROM), or flash memory. The memory 106 may comprise a Random-Access Memory (RAM), a Read-Only Memory (ROM), a Complementary Metal Oxide Semiconductor Memory (CMOS), a magnetic surface memory, a Hard Disk Drive (HDD), a floppy disk, a magnetic tape, a disc (CD-ROM, DVD-ROM, etc.), a USB Flash Drive (UFD), or the like, or any combination thereof.

The term "processor" used herein may refer to a hardware processor comprising a Central Processing Unit (CPU), an Application-Specific Integrated Circuit (ASIC), an Application-Specific Instruction-Set Processor (ASIP), a Graphics Processing Unit (GPU), a Physics Processing Unit (PPU), a Digital Signal Processor (DSP), a Field Programmable Gate Array (FPGA), a Programmable Logic Device (PLD), a Controller, a Microcontroller unit, a Processor, a Microprocessor, an ARM, or the like, or any combination thereof.

The processor 302 may retrieve computer program code instructions that may be stored in the memory 304 for execution of the computer program code instructions. The processor 302 may be embodied in a number of different ways. For example, the processor 302 may be embodied as one or more of various hardware processing means such as a coprocessor, a microprocessor, a controller, a digital signal processor (DSP), a processing element with or without an accompanying DSP, or various other processing circuitry including integrated circuits such as, for example, an ASIC (application specific integrated circuit), an FPGA (field programmable gate array), a microcontroller unit (MCU), a hardware accelerator, a special-purpose computer chip, or the like. As such, in some embodiments, the processor 302 may comprise one or more processing cores configured to perform independently. A multi-core processor may enable multiprocessing within a single physical package. Additionally, or alternatively, the processor 104 may comprise one or more processors configured in tandem via the bus to enable independent execution of instructions, pipelining, and/or multithreading.

Additionally, or alternatively, the processor 302 may comprise one or more processors capable of processing large volumes of workloads and operations to provide support for big data analysis. In an example embodiment, the processor 302 may be in communication with a memory 304 via a bus for passing information among components of the system 102.

The memory 304 may be non-transitory and may comprise, for example, one or more volatile and/or non-volatile memories. In other words, for example, the memory 304 may be an electronic storage device (for example, a computer readable storage medium) comprising gates configured to store data (for example, bits) that may be retrievable by a machine (for example, a computing device like the processor 302). The memory 304 may be configured to store information, data, contents, applications, instructions, or the like, for enabling the apparatus to carry out various functions in accordance with an example embodiment of the present disclosure. For example, the memory 304 may be configured to buffer input data for processing by the processor 302.

The memory 304 may store instructions that, when executed by the processor 302, cause the system 102 to perform one or more operations of the present disclosure which will be described in greater detail in conjunction with FIG. 3.

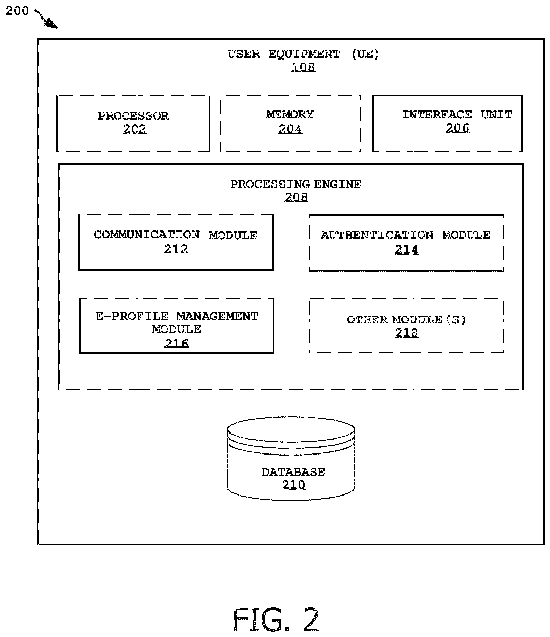

The UE 108 may comprise various hardware and software tools that may be integrated with the system 102 to enhance its functionality. The complete process followed by the system 102 is explained in detail in conjunction with FIG. 2 to FIG. 6.

FIG. 2 illustrates a block diagram 200 illustrating various modules within the user equipment (UE) 108, for enabling dynamic enrollment into private network, in accordance with an example embodiment. The UE 108 comprises one or more processor(s) 202. The one or more processor(s) 202 are implemented as one or more microprocessors, microcomputers, microcontrollers, digital signal processors, central processing units, logic circuitries, and/or any devices that manipulate data based on operational instructions. Among other capabilities, one or more processor(s) 202 are configured to fetch and execute computer-readable instructions stored in a memory of the sink device. The memory 204 stores one or more computer-readable instructions or routines, which are fetched and executed to create or share the data units over a network service. Memory 204 comprises any non-transitory storage device comprising, for example, volatile memory such as RAM, or non-volatile memory such as EPROM, flash memory, and the like.

In an embodiment, the UE 108 also comprises an interface(s) 206. The interface(s) 206 comprises a variety of interfaces, for example, interfaces for data input and output devices referred to as I/O devices, storage devices, and the like. The interface(s) 206 facilitates communication of the UE 108 with various devices or servers coupled to the UE 108. The interface(s) 206 also provides a communication pathway for one or more components of the UE 108. Examples of such components comprise, but are not limited to, processing engine(s) and database. Interface 206 comprises a platform for communication with the devices/servers to read real-time data /write data in the UE 108 and to communicate with the system 102. Interfaces 206 comprise a Graphical interface that allows user to feed inputs, to type/write/ upload the data and certificates, and other software and hardware interfaces, for example, interfaces for peripheral device(s), such as a keyboard, a mouse, an external memory, and a printer.

In an embodiment, the processing engine(s) 208 are implemented as a combination of hardware and programming (for example, programmable instructions) to implement one or more functionalities of the processing engine(s) 208. In the examples described herein, such combinations of hardware and programming may be implemented in several different ways. For example, the programming for the processing engine(s) 208 are processor-executable instructions stored on a non-transitory machine-readable storage medium, and the hardware for the processing engine(s) comprises a processing resource (for example, one or more processors), to execute such instructions. In the present examples, the machine-readable storage medium stores instructions that, when executed by the processing resource, implement the processing engine(s). In such examples, the UE 108 comprises the machine-readable storage medium storing the instructions and the processing resource to execute the instructions, or the machine-readable storage medium may be separate but accessible to the UE 108 and the processing resource. In other examples, the processing engine(s) 208 is implemented by electronic circuitry. Database 210 comprises data that is either stored or generated as a result of functionalities implemented by any of the components of the processing engine(s) 208.

In an exemplary embodiment, the processing engine 208 may comprise one or more engines selected from any of a communication module 212, an authentication module 214, and an e-profile management module 216 and other modules 218 having functions that may comprise but are not limited to testing, storage, and peripheral functions, such as wireless communication unit for remote operation, audio unit for alerts and the like.

The communication module 212 is configured to establish and maintain connectivity with the private network. The communication module 212 comprises hardware components like the modem and associated software that interfaces with the network. The communication module 212 uses protocols such as Bearer Independent Protocol (BIP) to facilitate data exchange between the UE 108 and remote servers, ensuring reliable communication, and supports various network technologies like LTE and 5G, allowing seamless integration with eSIM provisioning services. The communication module 212 may be an intermediary bridge for transferring eSIM-related data, and the communication module 212 ensures smooth on boarding and profile management.

The authentication module 214 is configured to access to the private network by validating user and device credentials. The authentication module 214 communicates with the Home Subscriber Server (HSS) in the private network to verify identity through mechanisms like certificate-based authentication. The authentication module 214 ensures the integrity of the device's identity, prevents unauthorized access, and enforces network security policies. In an embodiment, a Global HSS which is a centralized Home Subscriber Server (HSS) that serves multiple networks, regions, or operators by storing and managing subscriber data in a unified system may be used for authentication. Further, Global HSS is typically used in large-scale telecom environments where operators want to consolidate subscriber management across multiple locations. In an another embodiment, UDM (Unified Data Management), a key component in 5G Core (5GC) networks, acting as the evolution of the HSS (Home Subscriber Server) in LTE and HLR (Home Location Register) in 2G/3G networks may be used for authentication. The UDM is responsible for managing subscriber data and supporting authentication, mobility, and session management. In an alternate embodiment, an Identity Credential Management Database (IDCM DB) a specialized database used in telecommunications networks, security systems, and identity management frameworks to store and manage subscriber credentials and authentication data may be employed for authentication. The IDCM DB plays a key role in ensuring secure user authentication, authorization, and access control.

The e-profile management module 216 is configured to manage the lifecycle of eSIM profiles on the embedded Universal Integrated Circuit Card (eUICC) 112 (shown in FIG. 1B). The e-profile management module 216 handles tasks such as downloading, activating, and updating profiles while ensuring secure storage of critical credentials like International Mobile Subscriber Identity (IMSI) and encryption keys. The e-profile management module 216 interacts with a Captive Portal Applet for provisioning and with an OTA server for remote updates. The e-profile management module 216 may support multiple profiles, and enables seamless switching between at least one of a private network and a public network, enhancing user flexibility.

FIG. 3 illustrates a block diagram 300 illustrating various modules within the system 102 for dynamically enrolling the at least one UE 108 into private network, in accordance with an example embodiment. The system 102 comprises one or more processor(s) 302. The one or more processor(s) 302 are implemented as one or more microprocessors, microcomputers, microcontrollers, digital signal processors, central processing units, logic circuitries, and/or any devices that manipulate data based on operational instructions. Among other capabilities, one or more processor(s) 302 are configured to fetch and execute computer-readable instructions stored in a memory of the sink device. The memory 304 stores one or more computer-readable instructions or routines, which are fetched and executed to create or share the data units over a network service. Memory 304 comprises any non-transitory storage device comprising, for example, volatile memory such as RAM, or non-volatile memory such as EPROM, flash memory, and the like.

In an embodiment, the system 102 also comprises an interface(s) 306. The interface(s) 306 comprises a variety of interfaces, for example, interfaces for data input and output devices referred to as I/O devices, storage devices, and the like. The interface(s) 306 facilitates communication of the user device 108 with various devices or servers coupled to the user device 108. The interface(s) 306 also provides a communication pathway for one or more components of the user device 108. Examples of such components comprise, but are not limited to, processing engine(s) and database. Interface 306 comprises a platform for communication with the devices/servers to read real-time data /write data in the system 102 and to communicate with the other devices. Interfaces 306 comprise a Graphical interface that allows user to feed inputs, to type/write/ upload the data and certificates, and other software and hardware interfaces, for example, interfaces for peripheral device(s), such as a keyboard, a mouse, an external memory, and a printer.

In an embodiment, the processing engine(s) 308 are implemented as a combination of hardware and programming (for example, programmable instructions) to implement one or more functionalities of the processing engine(s) 308. In the examples described herein, such combinations of hardware and programming may be implemented in several different ways. For example, the programming for the processing engine(s) 308 are processor-executable instructions stored on a non-transitory machine-readable storage medium, and the hardware for the processing engine(s) comprises a processing resource (for example, one or more processors), to execute such instructions. In the present examples, the machine-readable storage medium stores instructions that, when executed by the processing resource, implement the processing engine(s). In such examples, the system 102 comprises the machine-readable storage medium storing the instructions and the processing resource to execute the instructions, or the machine-readable storage medium may be separate but accessible to the user device and the processing resource. In other examples, the processing engine(s) 308 is implemented by electronic circuitry. Database 310 comprises data that is either stored or generated as a result of functionalities implemented by any of the components of the processing engine(s) 308.

In an exemplary embodiment, the processing engine 308 may comprise one or more engines selected from any of a data acquisition module 312, a data management module 314, and a validation module 316 and other modules 318 having functions that may comprise but are not limited to testing, storage, and peripheral functions, such as wireless communication unit for remote operation, audio unit for alerts and the like.

The data acquisition module 312 is configured to collect essential information required for enrolling the UE 108 into the private network, which comprises device identifiers, such as the International Mobile Subscriber Identity (IMSI), and network-related metadata. The data acquisition module 312 interacts with the UE 108 to capture real-time data using secure communication protocols, ensuring integrity during the transfer. The data acquisition module 312 also interfaces with external systems like the Home Subscriber Server (HSS) or Over-The-Air (OTA) platforms to retrieve necessary credentials.

The data management module 314 is configured to handle the organization, processing, and storage of the acquired information for seamless enrolment of UE 108 into the private network. The data management module 314 is configured to validate, categorize, and securely store critical data such as IMSI, encryption keys, and device profiles. The data management module 314 also manages the lifecycle of data, ensuring timely updates or removals based on network policies.

The validation module 316 is configured to ensure the accuracy and legitimacy of the data collected and processed for enrolling UE 108 into the private network. The validation module 316 cross-checks the credentials of the registered UE 108 against network databases, such as the HSS, to confirm authenticity. The validation module 316 also performs integrity checks to detect tampered or incomplete data, preventing unauthorized access to the network. By employing encryption and secure protocols, the validation module 316 protects the validation process from external threats. Furthermore, the validation module 316 enforces policy-based rules to ensure that only compliant devices are on boarded.

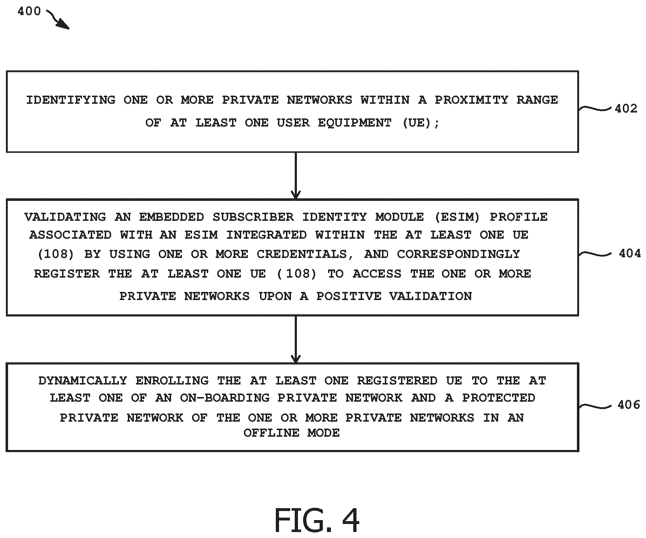

FIG. 4 illustrates an exemplary method 400 for dynamically enrolling at least one user equipment 108 into one or more private networks, in accordance with an example embodiment. It will be understood that each block of the flow diagram of the method 400 may be implemented by various means, such as hardware, firmware, processor, circuitry, and/or other communication devices associated with execution of software comprising one or more computer program instructions. For example, one or more of the procedures described above may be embodied by computer program instructions. In this regard, the computer program instructions which embody the procedures described above may be stored by a memory 306 of the system 102, employing an embodiment of the present disclosure and executed by a processor 302 of the system 102.

As will be appreciated, any such computer program instructions may be loaded onto a computer or other programmable apparatus (for example, hardware) to produce a machine, such that the resulting computer or other programmable apparatus implements the functions specified in the flow diagram blocks. These computer program instructions may also be stored in a computer-readable memory that may direct a computer or other programmable apparatus to function in a particular manner, such that the instructions stored in the computer-readable memory produce an article of manufacture the execution of which implements the function specified in the flowchart blocks. The computer program instructions may also be loaded onto a computer or other programmable apparatus to cause a series of operations to be performed on the computer or other programmable apparatus to produce a computer-implemented process such that the instructions which execute on the computer or other programmable apparatus provide operations for implementing the functions specified in the flow diagram blocks. Accordingly, blocks of the flow diagram support combinations of means for performing the specified functions and combinations of operations for performing the specified functions for performing the specified functions. It will also be understood that one or more blocks of the flow diagram, and combinations of blocks in the flow diagram, may be implemented by special purpose hardware-based computer systems which perform the specified functions, or combinations of special purpose hardware and computer instructions.

FIG. 4 illustrates a flow diagram 400 of the method for dynamically enrolling at least one user equipment into one or more private networks is executing in the computing environment, in accordance with an example embodiment. The method 400 is implemented by the system architecture 300. At step 402, method 400 comprises steps of identifying one or more private networks within a proximity range of at least one user equipment (UE) 108.

At step 404, method 400 comprises steps of validating an embedded Subscriber Identity Module (eSIM) profile associated with an eSIM integrated within the at least one UE by using one or more credentials, and correspondingly register the at least one UE to access the one or more private networks upon a positive validation

At step 408, method 400 comprises steps of dynamically enrolling the at least one registered UE to the at least one of an on-boarding private network and a protected private network of the one or more private networks in an offline mode.

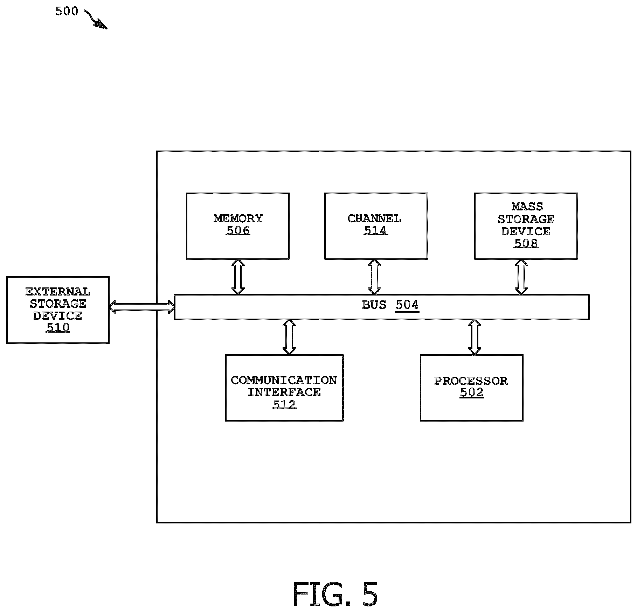

The disclosed methods and systems may be executed on a conventional or general-purpose computing system, such as a personal computer (PC) or server. Referring to FIG. 5, an exemplary computing system 500 is illustrated, which may implement processing functionality for various embodiments (e.g., as a SIMD device, client device, server device, or one or more processors). Those skilled in the art will recognize that other computing systems or architectures may also be used to implement the disclosure. The computing system 500 may represent a user device, such as a desktop, laptop, mobile phone, personal entertainment device, DVR, or any other special or general-purpose computing device appropriate for a given application or environment. The computing system 500 may comprise one or more processors, such as processor 502, implemented using a general-purpose or specialized processing engine, such as a microprocessor, microcontroller, or other control logic. In some embodiments, processor 502 may be an AI processor, implemented as a Tensor Processing Unit (TPU), graphical processing unit (GPU), or custom-programmable solution, such as a Field-Programmable Gate Array (FPGA).

The computing system 500 may further comprise memory 506 (e.g., Random Access Memory (RAM) or other dynamic memory) for storing instructions and information to be executed by processor 502. Memory 506 may also store temporary variables or intermediate information during execution. Additionally, the computing system 500 may comprise a read-only memory (ROM) or other static storage device connected to bus 504 for storing static information and instructions for processor 502.

Storage devices 508 may also be included in computing system 500, consisting of, for example, a media drive and a removable storage interface. Media drive may support fixed or removable storage media, such as hard disk drives, floppy drives, magnetic tape drives, SD card ports, USB ports, optical disk drives (e.g., CD or DVD drives), or other media. Storage media may comprise hard disks, magnetic tapes, flash drives, or other media that can be read and written to by media drive. Storage media may store computer-readable software or data.

Alternatively, storage devices 508 may comprise other means for loading computer programs or data into computing system 500, such as removable storage unit 510 and interface, program cartridges, removable memory (e.g., flash memory), memory slots, and similar storage units and interfaces.

Computing system 500 may also comprise a communications interface 512 to transfer software and data between external devices and system 500. Examples comprise network interfaces (e.g., Ethernet), communication ports (e.g., USB, micro-USB), Near Field Communication (NFC), and other protocols. The signals transferred via communications interface 512 may comprise electronic, electromagnetic, optical, or other forms of transmission through channel 514, which may utilize wireless mediums, fibre optics, wires, or cables.

Computing system 500 may also comprise Input/Output (I/O) devices, such as a display, keypad, microphone, speakers, vibration motors, LED indicators, etc., allowing user interaction and feedback. The term "computer-readable medium" may refer to any storage medium used, such as memory 506, storage devices 508, removable storage unit 510, or signal(s) on channel 514. Such media may store sequences of instructions, or "computer program code," which, when executed, enable computing system 500 to perform the methods and functions described in embodiments of the invention.

In embodiments where elements are implemented in software, the software may be stored on a computer-readable medium and loaded into computing system 500 via removable storage unit 510, media drive, or communications interface 512. When executed by processor 502, this control logic (e.g., software instructions or computer program code) causes processor 502 to perform the invention's functions as described.

As will be appreciated by those skilled in the art, the techniques described in the various embodiments discussed above are not routine, or conventional, or well understood in the art. The techniques discussed above provide for innovative solutions to address the challenges associated with generating holistic responses based on structural and semantic queries. The disclosed techniques offer several advantages over the existing methods as listed in below paragraphs.

The present disclosure introduces a system and a method for dynamically enrolling the user equipment into one or more private networks. The seamless integration of new devices into private networks, regardless of the type or configuration, ensuring that the one or more private networks can quickly adapt to changing requirements. Thus, ensuring the network to scale efficiently by allowing a wide range of devices to be on boarded as needed, supporting growth without the need for manual intervention or extensive infrastructure changes.

The present disclosure adapts an automated and secure enrolment processes to minimize the risk of unauthorized access, as each UE can be authenticated and provisioned with the appropriate credentials before connecting to the private network.

It is to be appreciated that the Captive Portal Applet introduces significant technical advancements that enhance the efficiency, security, and adaptability of private network operations. The Captive Portal Applet simplifies the process of user on boarding, particularly for dynamic device provisioning, by providing a robust solution tailored to private network environments. Unlike conventional systems, the system of the present disclosure ensures secure and flexible management of eSIM provisioning and lifecycle operations directly within the local network infrastructure, thereby eliminating reliance on external public networks.

In addition, the system and method leverages advanced communication protocols, including Bearer Independent Protocol (BIP) and Card Application Toolkit (CAT), enabling seamless and efficient interaction between the modem, the embedded Universal Integrated Circuit Card (eUICC), and various components of the private network. This integration ensures a smooth data exchange and enhances operational reliability.

Furthermore, the system and method can be implemented in specialized environments such as factories, tactical networks, and IoT ecosystems. In these settings, where security, flexibility, and localized provisioning are critical, the Captive Portal Applet offers a highly effective solution, addressing challenges related to secure device on boarding and network adaptability. These technical advancements collectively position the invention as a transformative approach to managing private network operations.

Many modifications and other embodiments of the inventions set forth herein will come to mind to one skilled in the art to which these inventions pertain having the benefit of the teachings presented in the foregoing descriptions and the associated drawings. Therefore, it is to be understood that the inventions are not to be limited to the specific embodiments disclosed and that modifications and other embodiments are intended to be included within the scope of the appended claims. Moreover, although the foregoing descriptions and the associated drawings describe example embodiments in the context of certain example combinations of elements and/or functions, it should be appreciated that different combinations of elements and/or functions may be provided by alternative embodiments without departing from the scope of the appended claims. In this regard, for example, different combinations of elements and/or functions than those explicitly described above are also contemplated as may be set forth in some of the appended claims. Although specific terms are employed herein, they are used in a generic and descriptive sense only and not for purposes of limitation.

It is to be understood that the above description is intended to be illustrative, and not restrictive. For example, the above-discussed embodiments may be used in combination with each other. Many other embodiments will be apparent to those of skill in the art upon reviewing the above description.

With respect to the use of substantially any plural and/or singular terms herein, those having skill in the art can translate from the plural to the singular and/or from the singular to the plural as is appropriate to the context and/or application. The various singular/plural permutations may be expressly set forth herein for sake of clarity.

The benefits and advantages which may be provided by the present disclosure have been described above with regard to specific embodiments. These benefits and advantages, and any elements or limitations that may cause them to occur or to become more pronounced are not to be construed as critical, required, or essential features of any or all of the embodiments.

While the present disclosure has been described with reference to particular embodiments, it should be understood that the embodiments are illustrative and that the scope of the invention is not limited to these embodiments. Many variations, modifications, additions, and improvements to the embodiments described above are possible. It is contemplated that these variations, modifications, additions, and improvements fall within the scope of the invention.

## Claims

1. A system (102) for dynamically enrolling user equipment (UE) (108) into private network, the system (102) comprising:
one or more processors (302) coupled with at least one memory (304), wherein said at least one memory (304) stores instructions which when executed by the one or more processors (302) cause the system (102) to:
identify one or more private networks within a range of at least one user equipment (UE) (108);
validate an embedded Subscriber Identity Module (eSIM) profile associated with an eSIM integrated within the at least one UE (108) based on one or more credentials, and correspondingly register the at least one UE (108) to access the one or more private networks upon a positive validation; and
dynamically enrol the at least one registered UE (108) to the at least one of: an on-boarding private network and a protected private network among the one or more private networks in an offline mode.

2. The system (102) according to claim 1, wherein the at least one registered UE (108) is enrolled with the on-boarding private network based on the eSIM profile,
wherein the at least one registered UE (108) is enrolled with the protected private network based on the eSIM profile.

3. The system (102) according to any previous claims, wherein the one or more private networks comprise a local Over-the-Air (OTA) service and a local Home Subscriber Server (HSS) service,
wherein the local OTA service enables communication between the one or more private networks and the eSIM in the offline mode,
wherein the local HSS service enables storage of the one or more credentials associated with the at least one registered UE (108).

4. The system (102) according to any previous claims, wherein the system (102) comprises:
at least one API configured to trigger at least one OTA session towards the OTA service when the at least one UE is enrolled with the on-boarding private network.

5. The system (102) according to any previous claims, wherein the at least one API is configured to trigger a reattachment with a new eSIM embedded within the at least one registered UE during enrolment with the on-boarding private network.

6. The system (102) according to any previous claims, wherein the eSIM profile is configured to connect the at least one UE (108) to the one or more private networks before the enrolment,
wherein the eSIM profile is downloaded on the eSIM of the at least one registered UE (108) by using one or more mechanisms comprising at least one of an online with Optimal Data Compression (ODC), and an offline with Inter-Frame Pacing Protocol (IFPP).

7. The system (102) according to any previous claims, wherein the offline mode pertains to disconnection of the at least one UE (108) from one or more internet services.

8. A method (400) for dynamically enrolling at least one user equipment (108) into one or more private networks, the method (400) comprising the steps of:
identifying, by a system (102), one or more private networks within a proximity range of at least one user equipment (UE);
validating, by the system (102), an embedded Subscriber Identity Module (eSIM) profile associated with an eSIM integrated within the at least one UE (108) by using one or more credentials, and correspondingly register the at least one UE (108) to access the one or more private networks upon a positive validation; and
dynamically enrolling, by the system (102), the at least one registered UE (108) to the at least one of an on-boarding private network and a protected private network of the one or more private networks in an offline mode.

9. The method (400) of claim 8, wherein the method (400) comprises the steps of:
enrolling the at least one registered UE (108) with the on-boarding private network based on the eSIM profile,
enrolling the at least one registered UE (108) with the protected private network based on the eSIM profile.

10. The method (400) according to any previous claims, wherein the one or more private network comprises a local Over-the-Air (OTA) service and a local Home Subscriber Server (HSS) service, wherein the method (400) comprises the steps of:
enabling, by the local OTA service, communication between the one or more private networks and the eSIM in the offline mode,
enabling, by the local HSS service, storage of the one or more credentials associated with the at least one registered UE (108).

11. The method (400) according to any previous claims, wherein the method (400) comprises the steps of:
triggering, by at least one API, at least one OTA session towards the OTA service when the at least one UE (108) is associated with the on-boarding private network.

12. The method (400) according to any previous claims, wherein the method (400) comprises the steps of:
triggering, by the at least one API, a reattachment with a new eSIM embedded within the at least one registered UE (108) during enrolment with the on-boarding private network.

13. The method (400) according to any previous claims, wherein the eSIM profile is configured to connect the at least one UE (108) to the one or more private networks before the enrolment
wherein the eSIM profile is downloaded on the eSIM of the at least one registered UE (108) by using one or more mechanisms comprising at least one of an online with ODC, and an offline with IFPP.

14. The method (400) according to any previous claims, wherein the offline mode pertains to disconnection of the at least one UE (108) from one or more internet services.
